# NEW EUROPEAN PATENT SPECIFICATION

(11) **EP 0 343 699 B2**
(45) Date of publication and mention of the opposition decision: **21.11.2001**
(45) Mention of the grant of the patent: 23.08.1995
(21) Application number: 89201002.6
(22) Date of filing: 19.04.1989
(51) Int. Cl.: A01D 43/10, A01B 59/048, A01D 67/00

(54) **An agricultural machine**
Landmaschine
Machine agricole

(30) Priority: 21.04.1988 NL 8801040
(43) Date of publication of application: 29.11.1989
(73) Proprietor: MAASLAND N.V., 3155 PD Maasland (NL)
(72) Inventor: Sikkema, Sape, NL-3143 CP Maassluis (NL); Koorn, Maarten, NL-3131 JC Vlaardingen (NL)
(74) Representative: Corten, Maurice Jean F.M.

(56) References cited:
- GB-A- 2 052 237
- GB-A- 2 079 126
- US-A- 4 724 661

## Description

The present invention relates to an agricultural machine comprising a mowing unit and a frame for connecting the mowing unit to the lifting hitch at the front side of a tractor, said frame being provided with a coupling element to engage the lifting hitch, two substantially parallel lower supporting beams which at substantially the same height are connected to said coupling element capably of pivoting in a vertical plane near the lower end thereof, at least one upper supporting beam connected near the upper end of the coupling element capably of pivoting in a vertical plane, a carrier frame for the mowing unit, which carrier frame is connected to said lower supporting beams and pivotably connected to said upper supporting beam, the connections of the coupling element with said lower supporting beams and said upper supporting beam (9) being, seen in the directic of operative travel, behind the connections of the carrier frame with said lower supporting beams and said upper supporting beam, and at least one weight relief spring (22) providing a weight relief of the agricultural machine which is, within a certain range in height, substantially independent of the position of the carrier frame relative to the lifting hitch, the said position then being variable.

Such a machine is known from GB-A-2 079 126. In the machine described in that document the ower supporting beams are fitted rigidly to the carrier frame, while the upper supporting beam is pivotably and slidably connected to said carrier frame. By means of a cylinder between the carrier frame and the coupling element, the mowing unit, coupled to the carrier frame can only be pivoted; an upward movement of the machine is realized by means of the lifting hitch of the tractor. Furthermore in the machine described in the above document the weight relief spring is provided between the carrier frame and the lifting hitch of the tractor; this is a serious disadvantage in coupling the machine to the tractor. The present invention aimes to obviate these disadvantages and to provide for a machine which can easily be coupled to the tractor and lifted upwardly relative to the lifting hitch of the tractor.

According to the invention the agricultural machine as described in the opening paragraph is characterized by the features of claim 1.

In a preferred embodiment the pivot shafts of the lower supporting beams relative to the coupling element are located below the pivot shafts of the coupling element to the pivot arms of the lifting hitch. When furthermore the coupling element comprises horizontally extending beams, to the ends of which the lower supporting beams are pivotably connected, a rather compact and practical construction is obtained where the crusher device is located at least partly below and between the frame.

In a specific design, the weight relief spring is connected to the coupling element near the upper end thereof and thence extends obliquely downwardly to the carrier frame. More particularly, the weight relief spring is connected to the coupling element at substantially the same height as the upper supporting beam. In this connection, it should be noted that the location proper of the pivot points of the lower and upper supporting beams as well as the place of attachment of the weight relief spring to on the one hand the coupling element and to on the other hand the carrier frame are of minor importance. These locations are chosen to advantage in a specific embodiment. More of importance are the angles at which the lower and upper supporting beams and the weight relief spring extend relative to a horizontal plane, the length of the supporting beams as well as the spring properties of the weight relief spring.

In a preferred embodiment of the invention, two weight relief springs are arranged between the coupling element and the carrier frame. Preferably, these weight relief springs are furthermore provided on either side of the centre of gravity of the machine and, more specifically, equispaced therefrom. As in general the centre of gravity of the machine does not coincide with the centre, this implies that the weight relief springs must then be arranged asymmetrically on either side of the centre.

As already mentioned the weight relief is, within a certain range in height, substantially independent of the weight position of the carrier frame relative to the lifting hitch. More specifically, during operation, the weight relief of the machine varies maximally 10% in value within a range, within which the position of the frame is pivotably relative to the lifting hitch in a substantially vertical plane, of maximally 30°, the said range being located in an interval relative to a horizontal plane of from approximately -15° to +30° and, preferably, of from approximately 0° to +30°. Preferably, this range is adjustable. Such a pivotal movement of the frame relative to the lifting hitch implies for the machine connected to the frame a movement in a substantially vertical direction; consequently, during this movement, e.g. when the machine is moved across stones, the weight relief remains constant within certain limits, which is advantageous for the operation of the machine in the long run. In accordance with the invention, the angle at which, during operation, the weight relief spring extends obliquely downwardly relative to the horizontal plane in a direction facing away from the lifting hitch can vary in an interval of from approximately -40° to -15°, and in particular of from approximately -30° to -15°.

In a further preferred embodiment, the coupling element is provided with carrier elements which are rigidly connected thereto and extend in at least a direction facing away from the machine, while the lower supporting beams are connected pivotably to said carrier elements near that end thereof that is farthest from the machine. Hereby it is rendered possible to connect the machine to the carrier frame in a location closer to the coupling element. In the pivot point of each of the lower supporting beams a supporting element is arranged pivotably relative to a relevant carrier element, while a hydraulic cylinder is arranged between each of the lower supporting beams and a relevant supporting element. By means of these hydraulic cylinders it is possible to set the range within which the position of the lower supporting beams can pivot. The triangular construction, constituted by a lower supporting beam, a supporting element and a hydraulic cylinder, can pivot between two stops about the said pivot point with respect to a relevant carrier element. The first stop is constituted by a face provided on the coupling element and directed towards the supporting element, while the second stop is constituted by a face provided on the carrier element and directed towards the lower supporting beam.

When the agricultural machine is in the inactive condition, then the weight relief springs are slack, the lower supporting beams are directed obliquely upwardly in the direction facing away from the lifting hitch and the coupling element is in its lowest position determined by the second stop. After the lifting hitch of the tractor has engaged the coupling element, the coupling element is raised to a predetermined position wherein the weight relief spring is fully active; in this position, the agricultural machine is in the active conditon. In this condition, according to the invention, the lower supporting beams are adjusted at an angle comprised in the interval of from approximately -10° to +20° relative to the horizontal plane and are pivotable about the adjusted angle in a range determined by the hydraulic cylinders and the stops. In particular, the lower supporting beams are adjusted at an angle of approximately +4° relative to the horizontal plane and the range determined by the hydraulic cylinders and the stops extends from approximately 0° to +30°. This means that, during operation, the triangular constructions are freely movable within defined limits about the pivot point relative to the coupling element, so that the lower supporting beams are movable in such a manner in the interval of from approximately 0° to +30° about the adjusted angle of approximately +4° that, as a result thereof, the carrier frame of the agricultural machine can perform a stroke in a substantially vertical direction, determined by these angular values, and this machine can be moved across unevennesses in or on the field without the weight relief changing to any worthwhile extent because of the weight relief springs. When, during operation, the activity performed by the agricultural machine is to be interrupted, then the carrier frame will have to be moved upwardly until each of the triangular constructions abuts against the relevant second stop. To that end, the hydraulic cylinders are energized such that the lower supporting beams are pulled upwards. Consequently, the upward movement of the carrier frame is here performed via the parallelogram construction of the frame and not by the lifting hitch of the tractor. Since the coupling element, the agricultural machine being in operation, is located in a comparatively high position and comparatively close to and above the agricultural machine, the distance between the machine and the lifting hitch is also kept very small. On the other hand, this means that it is substantially impossible for the coupling element to be moved still further upwards by the lifting hitch of the tractor and that a further upward movement of the carrier frame must be realized via the parallelogram construction of the frame.

For a better understanding of the invention and to show how the same may be carried into effect, reference will now be made, by way of example, to some embodiments of the frame as shown in the accompanying drawings, wherein:
Figure 1 is a side view of the frame in accordance with the invention and having a mower-crusher suspended therefrom;
Figure 2 is a plan view of the frame of Figure 1 having a mower-crusher suspended therefrom;
Figure 3 shows a detail of the suspension of a mower-crusher in the frame as shown in Figure 1 and the drive of the crusher device of the mower-crusher, and
Figure 4 is a side view of a second embodiment of the frame according to the invention.

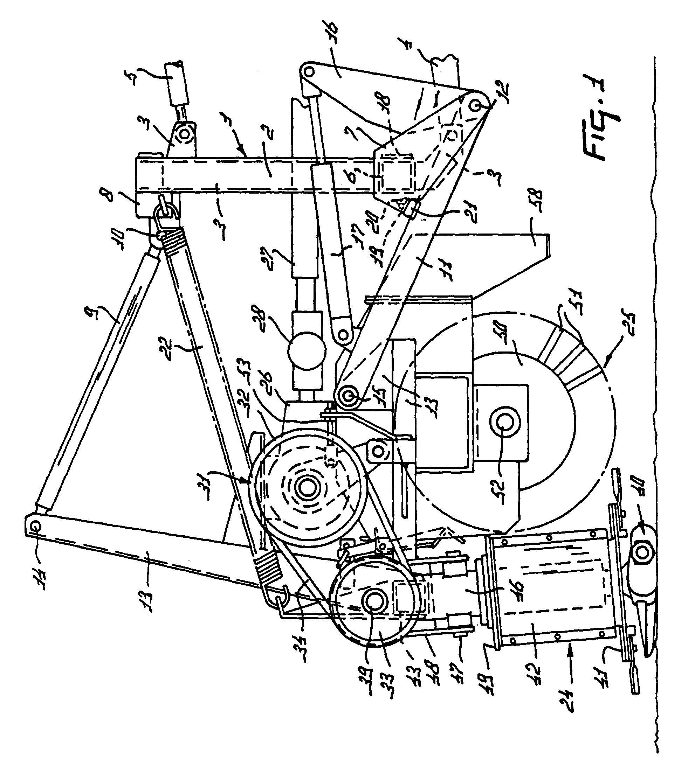

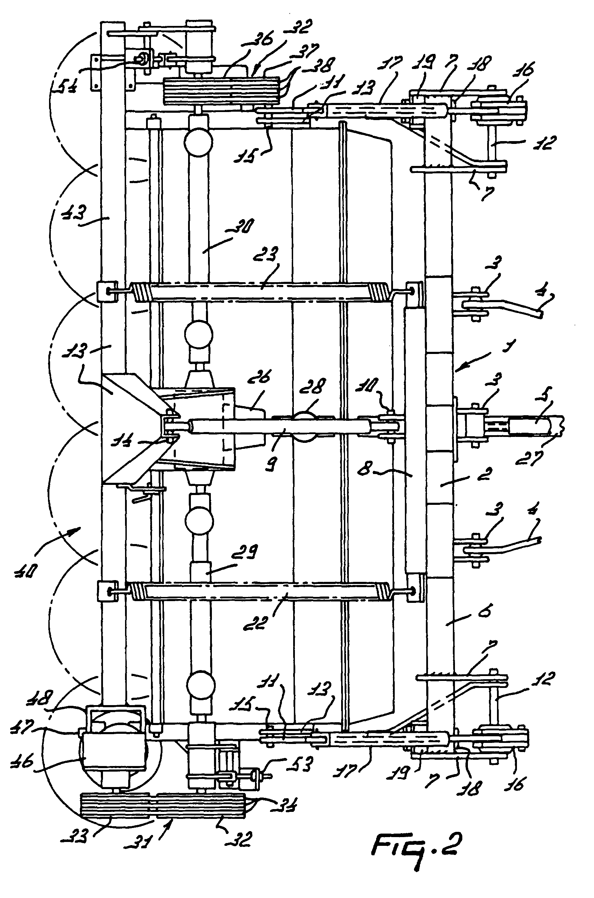

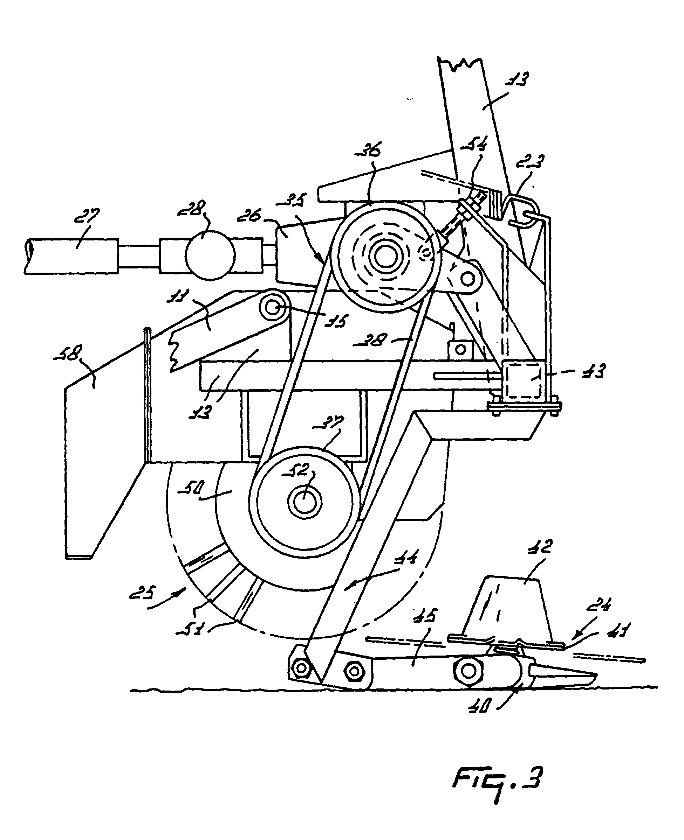

The frame, as shown in side view (Figure 1) and in plan view (Figure 2), comprises a coupling element 1 to engage the lifting hitch of a tractor. The coupling element 1 is constituted by a substantially vertical, inverted V-shaped frame 2, which can be engaged from one side and from below by the triangular trestle 3 of a lifting hitch. This trestle is coupled adjustably in height to the tractor by means of pivot arms 4 and a top rod 5. At the lower side of the frame 2, the coupling element 1 includes horizontal beams 6 which extend towards the edges of the frame and at whose ends there are fitted carrier elements 7 which extend rearwardly with respect to a mower-crusher suspended from the frame. At its upper side, the coupling element 1 is provided with a horizontal beam 8 extending towards the edges of the frame. The frame 2, the beams 6 and 8 and the carrier elements 7 together constitute a rigid integral whole.

An upper supporting beam 9 is connected to the beam 8 capably of pivoting in a vertical plane about a horizontal pivot shaft 10. A lower supporting beam 11 is connected to each of the carrier elements 7 capably of pivoting in a vertical plane about a horizontal pivot shaft 12. At the other end of the upper supporting beam 9 and of the lower supporting beams 11 there is connected capably of pivoting about respective pivot shafts 14 and 15 a carrier frame 13. The pivot shafts 10, 12, 14 and 15 are arranged such that, together with each of the lower supporting beams 11, the upper supporting beam 9 constitutes a quadrangular construction, as a result of which the carrier frame 13 is subjected to a substantially vertical displacement when the upper and lower supporting beams are pivoted around the pivot shafts 10 and 12 relative to the coupling element 1. Although in the embodiment shown this quadrangular structure is a parallelogram structure, it may differ therefrom to a slight extent, which causes the agricultural machine connected to the carrier frame 13 to be tilted to some extent during the substantially vertical movement of the carrier frame 13.

In addition, a supporting element 16 is disposed pivotably around each of the pivot shafts 12 with respect to a relevant carrier element 7. Between each of the lower supporting beams 11 and a relevant supporting element 16 there is arranged a hydraulic cylinder 17. The pivotability of the triangular construction, formed by a lower supporting beam 11, a relevant supporting element 16 and a relevant hydraulic element 17, is limited by two stops. The first stop is constituted by a face 18, directed towards the supporting element 16, on the relevant beam 6 of the coupling element 1. The second stop is constituted by a face 19, directed towards the lower supporting beam 11, on the carrier element 7. In the embodiment shown, a spring 21 is disposed between the lower supporting beam 11 and the face 19 by means of a bolt 20. The triangular structure 11, 16, 17 is pivotable around the pivot shaft 12, but its pivotal range is limited by the two stops and the position of the hydraulic cylinder 17.

Between the beam 8 and the carrier frame 13 there are arranged two weight relief springs 22 and 23. These weight relief springs are disposed on either side of the centre of gravity of the mower-crusher, inclusive of the frame. Figure 2 shows that this centre of gravity does not coincide with the centre of the machine; the weight relief springs are positioned asymmetrically relative to the centre.

A mower unit 24 and a crusher device 25 are connected to the carrier frame 13; the mower-crusher is positioned on the front side of the tractor by means of the above-described frame and the lifting hitch of the tractor. So as to load the frame to the least possible extent, the mower-crusher must be connected to the frame as closely as possible to the tractor; therefore, the coupling element 1 is positioned relatively high and as closely as possible to the carrier frame 13. However, with the object of providing a substantially constant weight relief within a certain pivotal range of the lower supporting beams 11, the length of the lower supporting beams must not be too short; hence, the pivot shafts 12 are positioned behind the frame 2 of the coupling element 1.

Figure 1 shows the mower-crusher in the inactive position, wherein the mower unit bears on the soil and the weight relief springs are slack. The coupling element 1 is in such a position that the lower supporting beams 11 abut against the stop face 19; in this position, the lower supporting beams 11 extend obliquely upwardly towards the front. When the mower-crusher should be brought to the active position, then the frame 2 of the coupling element 1 is engaged by the triangular trestle 3 of the lifting hitch provided on the front side of the tractor and is raised to the position wherein the mowing machine does indeed still bear on the soil, but wherein the weight relief springs provide the desired weight relief. The triangular structure 11, 16, 17 is adjusted to a pre-determined angular position between the two stops. When, during operation, the mower-crusher is moved across the field, then, partly because of the weight relief springs, it is pushed easily over all sorts of unevennesses. The mower-crusher can then be moved freely in the vertical direction through a range which is determined by the hydraulic cylinders 17 and the two stops. In a concrete embodiment, during operation, the lower supporting beams 11 are adjusted to an obliquely upwardly and forwardly extending angle of approximately 4° relative to a horizontal plane. When, during operation, the mower-crusher is moved over unevennesses, the triangular structure 11, 16, 17 pivots about the pivot shafts 12, in which situation the angle of the lower carrier beams can vary from approximately 0° to approximately + 30° obliquely upwardly and forwardly relative to a horizontal plane. By adjusting the hydraulic cylinders 17 differently, this range can be chosen differently and, consequently, also that of the mower crusher in the vertical direction.

The parallelogram structure and the weight relief springs are arranged such relative to each other and are dimensioned such that, due to the range of pivotal movement of the carrier frame as determined by the triangular structure, there is provided a substantially constant weight relief of the mower-crusher. In view of the position of the coupling element as closely as possible to the mower-crusher and the length of the lower and upper beams of the parallelogram structure, the weight relief is furthermore in substance determined by the angle between the lower supporting beams and the horizontal plane. When, during operation, this angle can vary through a range of approximately 30°, which range is located in an interval of from approximately -15° to +30° relative to a horizontal plane, then the value of the weight relief of the mower-crusher will vary maximally 10%. As has already been stated in the foregoing, in the adjusted position, the lower supporting beams extend in a concrete embodiment through an angle of +4° relative to the horizontal plane, whilst, when the mower-crusher machine is moved, they can pivot through an angle of approximately 0° to +30° relative to the horizontal plane. The angle at which, during operation, the weight relief spring extends obliquely downwardly and forwardly can vary from approximately +40° to + 15° relative to a horizontal plane when the angle of the lower supporting beams varies from approximately -15° to +30°, whilst the said angle of the weight relief springs can vary from approximately +30° to +15° when the said angle between the lower supporting beams varies from approximately 0 ° to +30°.

When, in the active position, the mowing is to be interrupted without the necessity of decoupling the mower-crusher, then the hydraulic cylinders 17 will be activated and the lower supporting beams will be pulled upwardly around the pivot shaft 12, thereby causing the carrier frame to be moved upwardly until the triangular structure abuts against the stop face 19. Therefore, the lifting is effected by the hydraulic cylinders 17 of the frame instead of by the top rod 4 of the lifting hitch. This transfer of the lifting function is necessary when the coupling element 1 has been arranged at such a height that, during operation of the mower-crusher, the lifting hitch is already more or less in its highest position.

In order to decouple the mower-crusher from the active position, the lifting hitch of the tractor is lowered until the coupling element 1 has been lowered so far that the lower supporting beams 11 abut against the stop face 19 and the assembly has returned to the position as shown in Figure 1.

The carrier frame 13 includes a transmission box 26, of which the input shaft 27 is connected to the power take-off shaft of the tractor via e.g. a flexible coupling 28 and the output shafts 29 and 30 (Figure 2) serve to drive the mowing unit 24 and the crusher device 25, respectively. At one side, the carrier frame 13 has a first belt transmission unit 31 which comprises a first pulley 32, a second pulley 33 and belts 34, which first belt transmission unit transfers the movement of the output shaft 29 to the mowing unit 24. In addition, the other side of the carrier frame 13 has a second belt transmission unit 35 (Figure 3) which comprises a first pulley 36, a second pulley 37 and belts 38, which second belt transmission unit transfers the movement of the output shaft 30 to the crusher device 25. The second pulley 33 of the first belt transmission unit is fitted on the input shaft 39 of the transmission system of the mowing unit. The mowing members of the mowing unit are driven by means of this transmission system. In this embodiment, the mowing unit is constituted by a cutter bar 40 provided with mowing members 41 which are rotatable about upwardly extending shafts. Above the two outermost mowing members there are arranged drum-shaped crop guide members 42. Above the cutter bar 40, and parallel thereto, there is arranged a carrier beam 43 which is connected rigidly to the carrier frame 13. As is apparent from Figure 3, the cutter bar 40 and the carrier beam 43 are interconnected at one end by a connection element 44, which element comprises an obliquely rearwardly and downwardly extending connection beam 44 and a substantially horizontal supporting member 45 to connect the lower end of the connection beam 44 to the cutter bar 40. This connection between the cutter bar 40 and the carrier beam 43 may include a flexible element; in particular, the flexible element may be constituted by at least part of the supporting member 45, e.g. by a spring steel plate. The flexible element contributes towards limiting the bending moments which, during operation, occur in the places of connection between the cutter bar and the carrier beam and act on these beams, as well as the forces directed in the longitudinal direction of the cutter bar. At the other end, the connection between the cutter bar 40 and the carrier beam 43 is effected via the relevant outermost mowing member (see Figure 1). Here, the carrier beam 43 is connected pivotably to a sleeve-shaped portion 46. To that end, pivotal bolts 47, around which the fork-shaped end 48 of the carrier beam 43 can pivot, are connected rigidly to this sleeve-shaped portion 46. In addition, the sleeve-shaped portion 46 is connected rigidly to the transmission system box, of which the shaft 39 is the input shaft and from where, via the drive shaft supported in this sleeve-shaped portion 46, the drive of the mowing members 41 is effected. The sleeve-shaped portion 46 extends partly into the relevant crop guide member 42 and is provided with an edge member 49 which is fitted with a tight fit to the crop guide member 42 and covers same. The forces acting on the cutter bar during operation are transferred to the input shaft 39 by the drive shaft extending through this connection between the cutter bar 40 and the carrier beam 43. These forces can be such that the drive shaft and, via its bearing, the sleeve-shaped portion 46 and the transmission system box of the mowing unit may be subjected to a slight displacement in a vertical plane perpendicular to the direction of operative travel. This also implies a slight displacement and/or pivotal movement of the input shaft 39 in the said plane. Hence, the input shaft 39 is here preferably driven by belts, in the embodiment shown here by the belts 34. In substance, the crusher device 25 is constituted by a horizontally extending tube 50, to which crusher members 51 are arranged. The tube 50 together with the crusher members 51 is capable of rotating around its longitudinal axis, i.e. in such a manner that the front side moves upwardly. Consequently, the crop mown by the mowing unit is seized by the crusher members 51, which discharge the crop upwardly and rearwardly. The tube 50 is driven from the pulley 37 provided around its shaft 52 (Figure 3). The position of the pulleys 32 and 36 for the drive of the mowing unit and the crusher device, respectively, can be adjusted by means of setting screws 53 and 54, respectively; hereby, the appropriate tension of the belts 34 and 38 can be set and also the shafts of the pulleys 32 and 36 can be brought into alignment with the output shafts 29 and 30 of the transmission box 26. It will be obvious that, in addition to the mower-crusher described in the foregoing, many other types of mower-crushers can be connected to the carrier frame 13.

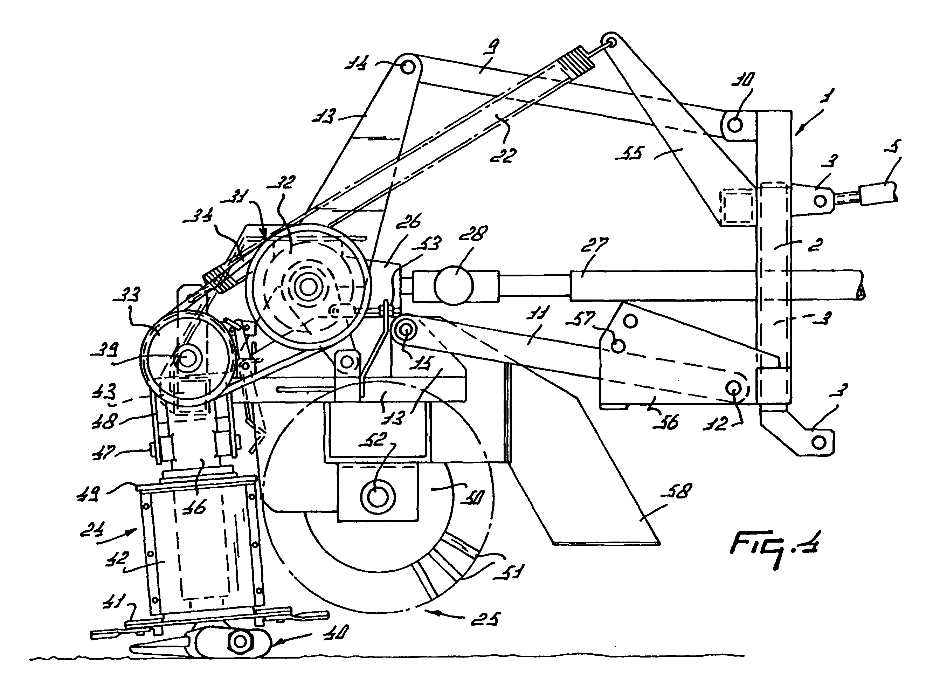

Figure 4 shows a modified embodiment of the frame, wherein the lower and upper supporting beams 11 and 9 are arranged in an identical manner, seen in side view, one above the other. The coupling element 1 is here moved slightly farther towards the rear, as a result of which the pivot shaft 12, and also the pivot shaft 10, is located directly in front of the coupling element 1. The weight relief springs 22 and 23 are here connected to auxiliary members 55 which are rigidly connected to the coupling element 1, so as to provide that with specifically dimensioned weight relief springs the same angular position thereof is yet maintained. The triangular structure (11, 16, 17) is lacking here. Since the coupling element 1 is located at a greater distance from the mower-crusher, this coupling element can be provided in a lower position. The lifting of the mower-crusher, when it is connected to the carrier frame 13, is here effected fully by the lifting hitch of the tractor. In the inactive position, however, the coupling element 1 must not be positioned too low, in which connection to the coupling element 1 there is connected rigidly a plate member 56 having a stop 57. In this position, the mode of operation of this stop is identical to that of the stop face 19 in Figure 1.

Finally, it should be noted that in both embodiments the crusher device includes a protection screen 58. In the second embodiment it may be made of metal; in the first embodiment, however, the distance between the coupling point of the trestle of the lifting hitch to the coupling element 1 is located so close to the crusher device that preference should be given to making the protection screen of reinforced canvas.

## Claims

1. An agricultural machine comprising a mowing unit (24) and a frame for connecting the mowing unit (24) to the lifting hitch at the front side of a tractor, said frame being provided with a coupling element (1) to engage the lifting hitch two substantially parallel lower supporting beams (11) which at substantially the same height are connected to said coupling element (1) capably of pivoting in a vertical plane near the lower end thereof, at least one upper supporting beam (9) connected near the upper end of the coupling element (1) capably of pivoting in a vertical plane, a carrier frame (13) for the mowing unit (24), which carrier frame (13) is connected to said lower supporting beams (11) and pivotably connected to said upper supporting beam (9), the connections of the coupling element (1) with said lower supporting beams (11) and said upper supporting beam (9) being, seen in the direction of operative travel, behind the connections of the carrier frame (13) with said lower supporting beams (11) and said upper supporting beam (9), and at least one weight relief spring (22) providing a weight relief of the agricultural machine which is, within a certain range in height, substantially independent of the position of the carrier frame (13) relative to the lifting hitch, the said position then being variable, **characterized in that** the lower supporting beams (11) are pivotably connected to the carrier frame (13) and the weight relief spring (22) is provided between the coupling element (1) and the carrier frame (13), while the agricultural machine further comprises a crusher device (25) which is located partly below and partly within the frame and which is connected to the carrier frame (13).

2. An agricultural machine as claimed in claim 1,
**characterized in that** the pivot shafts (12) of the lower supporting beams (11) relative to the coupling element (1) are located below the pivot shafts of the coupling element (1) to the pivot arms (4) of the lifting hitch.

3. An agricultural machine as claimed in claim 1 or 2, **characterized in that** the coupling element (1) comprises horizontally extending beams (6), to the ends of which the lower supporting beams (11) are pivotably connected.

4. An agricultural machine as claimed in claim 1, 2 or 3, **characterized in that** the weight relief spring (22) is connected to the coupling element (1) near the upper end thereof and thence extends obliquely downwardly to the carrier frame (13).

5. An agricultural machine as claimed in claim 4,
**characterized in that** the weight relief spring (22) is connected to the coupling element (1) at substantially the same height as the upper supporting beam (9).

6. An agricultural machine as claimed in any one of the preceding claims, **characterized in that** two weight relief springs (22, 23) are arranged between the coupling element (1) and the carrier frame (13).

7. An agricultural machine as claimed in claim 6,
**characterized in that** the weight relief springs (22, 23) are provided on either side of, and preferably equidistantly from, the centre of gravity of the machine.

8. An agricultural machine as claimed in any one of the preceding claims, **characterized in that**, during operation, the weight relief of the agricultural machine varies maximally 10% in value within a range, within which the position of the frame is pivotable relative to the lifting hitch in a substantially vertical plane, of maximally 30°, the said range being located in an interval relative to a horizontal plane of from approximately -15° to +30°, preferably from approximately 0° to +30°.

9. An agricultural machine as claimed in claim 8,
**characterized in that** the said range is adjustable.

10. An agricultural machine as claimed in any one of the preceding claims, **characterized in that** the angle at which, during operation, the weight relief spring extends obliquely downwardly relative to the horizontal plane in a direction facing away from the lifting hitch can vary in an interval of from approximately -40° to -15°, and in particular of from approximately -30° to -15°.

11. An agricultural machine as claimed in any one of claims 6 to 10, **characterized in that** the coupling element (1) is provided with carrier elements (7) which are rigidly connected thereto and extend in at least a direction facing away from the machine, while the lower supporting beams (11) are connected pivotably to said carrier elements (7) near that end thereof that is farthest from the machine.

12. An agricultural machine as claimed in claim 11,
**characterized in that** in the pivot point of each of the lower supporting beams (11) a supporting element (16) is arranged pivotably relative to a relevant carrying element (7), while a hydraulic cylinder (17) is arranged between each of the lower supporting beams (11) and a relevant supporting element (16), and that the range within which the position of the lower supporting beams (11) can pivot is set by means of the said hydraulic cylinders (17).

13. An agricultural machine as claimed in claim 12,
**characterized in that** the triangular construction, constituted by a lower supporting beam (11), a supporting element (16) and a hydraulic cylinder (17), can pivot between two stops (18, 19) about the said pivot point with respect to a relevant carrier element (7).

14. An agricultural machine as claimed in claim 13,
**characterized in that** the first stop (18) is constituted by a face provided on the coupling element (1) and directed towards the supporting element (16).

15. An agricultural machine as claimed in claim 13 or 14, **characterized in that** the second stop (19) is constituted by a face provided on the carrier element (7) and directed towards the lower supporting beam (11).

16. An agricultural machine as claimed in any one of claims 6 to 15, **characterized in that**, during operation, the lower supporting beams (11) are adjusted at an angle comprised in the interval of from approximately -10° to +20°, preferably approximately 4°, relative to the horizontal plane and are pivotable about the adjusted angle in a range, preferably extending from approximately 0° to 30°, determined by the hydraulic cylinders (17) and the stops (18, 19).

17. An agricultural machine as claimed in any one of the preceding claims, **characterized in that** a carrier frame (13), which forms part of the frame and is movable in a substantially vertical direction, is provided with a transmission box (26) whose input shaft (27) is connected via e.g. a flexible coupling (28) to the power take-off shaft of the tractor and whose output shafts (29, 30) are used to drive the mowing unit (24) and the crusher device (25), respectively.

## Patentansprüche

1. Landmaschine mit einem Mähwerk (24) und einem Rahmen zum Anschluß des Mähwerkes (24) an die frontseitige Hebevorrichtung eines Schleppers, wobei der Rahmen einen Anbaubock (1) zur Verbindung mit der Hebevorrichtung aufweist, zwei im wesentlichen parallelen unteren Stützbalken (11), die mit dem Anbaubock (1) nahe dessen unterem Ende in im wesentlichen gleicher Höhe und in vertikaler Richtung schwenkbar verbunden sind, mindestens einem oberen Stützbalken (9), der mit dem Anbaubock (1) nahe dessen oberem Ende in vertikaler Richtung schwenkbar verbunden ist, einem Tragrahmen (13) für das Mähwerk (24), der an die unteren Stützbalken (11) angeschlossen und mit dem oberen Stützbalken (9) schwenkbar verbunden ist, wobei die Verbindungen des Anbaubockes (1) mit den unteren Stützbalken (11) und dem oberen Stützbalken (9) in Arbeitsrichtung betrachtet hinter den Verbindungen des Tragrahmens (13) mit den unteren Stützbalken (11) und dem oberen Stützbalken (9) liegen, und mindestens einer Gewichtsentlastungsfeder (22), die eine Gewichtsentlastung der Landmaschine bewirkt, wobei die Gewichtsentlastung innerhalb eines gewissen Höhenbereiches im wesentlichen unabhängig von der Position des Tragrahmens (13) relativ zu der Hebevorrichtung und diese Position veränderbar ist,
**dadurch gekennzeichnet, daß** die unteren Stützbalken (11) mit dem Tragrahmen (13) schwenkbar verbunden sind und die Gewichtsentlastungsfeder (22) zwischen dem Anbaubock (1) und dem Tragrahmen (13) angeordnet ist, wobei die Landmaschine ferner einen Konditionierer (25) aufweist, der teilweise unterhalb und teilweise innerhalb des Rahmens angeordnet und mit dem Tragrahmen (13) verbunden ist.

2. Landmaschine nach Anspruch 1,
**dadurch gekennzeichnet, daß** die Schwenkachsen (12) der unteren Stützbalken (11) in bezug auf den Anbaubock (1) unterhalb der Schwenkachsen liegen, über die der Anbaubock (1) mit den Lenkern (4) der Hebevorrichtung verbunden ist.

3. Landmaschine nach den Ansprüchen 1 oder 2,
**dadurch gekennzeichnet, daß** der Anbaubock (1) horizontal ausgerichtete Balken (6) aufweist, mit deren Enden die unteren Stützbalken (11) schwenkbar verbunden sind.

4. Landmaschine nach den Ansprüchen 1, 2 oder 3,
**dadurch gekennzeichnet, daß** die Gewichtsentlastungsfeder (22) mit dem Anbaubock (1) nahe dessen oberem Ende verbunden ist und sich von dort aus schräg nach unten zu dem Tragrahmen (13) erstreckt.

5. Landmaschine nach Anspruch 4,
**dadurch gekennzeichnet, daß** die Gewichtsentlastungsfeder (22) mit dem Anbaubock (1) im wesentlichen in derselben Höhe wie der obere Stützbalken (9) verbunden ist.

6. Landmaschine nach einem der vorhergehenden Ansprüche,
**dadurch gekennzeichnet, daß** zwei Gewichtsentlastungsfedern (22, 23) zwischen dem Anbaubock (1) und dem Tragrahmen (13) angeordnet sind.

7. Landmaschine nach Anspruch 6,
**dadurch gekennzeichnet, daß** die Gewichtsentlastungsfedern (22, 23) beiderseits des Schwerpunktes der Maschine vorzugsweise in gleichem Abstand zu diesem angeordnet sind.

8. Landmaschine nach einem der vorhergehenden Ansprüche,
**dadurch gekennzeichnet, daß** die Gewichtsentlastung der Landmaschine im Betrieb um maximal 10 % innerhalb eines Bereiches von maximal 30° variiert, innerhalb dessen der Rahmen relativ zu der Hebevorrichtung in einer im wesentlichen vertikalen Ebene verschwenkbar ist, wobei dieser Bereich in einem Abstand zu einer horizontalen Ebene von etwa -15° bis +30°, vorzugsweise von etwa 0° bis +30° liegt.

9. Landmaschine nach Anspruch 8,
**dadurch gekennzeichnet, daß** der Bereich einstellbar ist.

10. Landmaschine nach einem der vorhergehenden Ansprüche,
**dadurch gekennzeichnet, daß** der Winkel, in dem sich die Gewichtsentlastungsfeder im Betrieb relativ zu der horizontalen Ebene in von der Hebevorrichtung abgewandter Richtung schräg nach unten erstreckt, innerhalb eines Bereiches von etwa -40° bis -15°, insbesondere von etwa -30° bis -15° variieren kann.

11. Landmaschine nach einem der Ansprüche 6 bis 10,
**dadurch gekennzeichnet, daß** der Anbaubock (1) mit ihm starr verbundene Trägerelemente (7) aufweist, die sich zumindest in von der Maschine abgewandter Richtung erstrecken, wobei die unteren Stützbalken (11) mit den Trägerelementen (7) nahe deren von der Maschine am weitesten entferntem Ende schwenkbar verbunden sind.

12. Landmaschine nach Anspruch 11,
**dadurch gekennzeichnet, daß** in dem Schwenkpunkt jedes unteren Stützbalkens (11) ein Stützelement (16) relativ zu einem zugehörigen Trägerelement (7) schwenkbar angeordnet ist, wobei zwischen jedem unteren Stützbalken (11) und einem zugehörigen Stützelement (16) ein Hydraulikzylinder (17) angeordnet ist, und daß der Schwenkbereich der unteren Stützbalken (11) mittels der Hydraulikzylinder (17) einzustellen ist.

13. Landmaschine nach Anspruch 12,
**dadurch gekennzeichnet, daß** die durch einen unteren Stützbalken (11), ein Stützelement (16) und einen Hydraulikzylinder (17) gebildete Dreieck-Konstruktion zwischen zwei Anschlägen (18, 19) relativ zu einem zugehörigen Trägerelement (7) um den Schwenkpunkt verschwenkbar ist.

14. Landmaschine nach Anspruch 13,
**dadurch gekennzeichnet, daß** der erste Anschlag (18) durch eine Fläche gebildet ist, die an dem Anbaubock (1) vorgesehen und dem Stützelement (16) zugewandt ist.

15. Landmaschine nach den Ansprüchen 13 oder 14,
**dadurch gekennzeichnet, daß** der zweite Anschlag (19) durch eine Fläche gebildet ist, die an dem Trägerelement (7) vorgesehen und dem unteren Stützbalken (11) zugewandt ist.

16. Landmaschine nach einem der Ansprüche 6 bis 15,
**dadurch gekennzeichnet, daß** die unteren Stützbalken (11) im Betrieb derart eingestellt sind, daß sie mit der horizontalen Ebene einen Winkel von etwa -10° bis +20°, vorzugsweise von etwa 4° bilden und um den eingestellten Winkel innerhalb eines Bereiches schwenkbar sind, der etwa 0° bis 30° beträgt und durch die Hydraulikzylinder (17) und die Anschläge (18, 19) bestimmt ist.

17. Landmaschine nach einem der vorhergehenden Ansprüche,
**dadurch gekennzeichnet, daß** der Tragrahmen (13), der Bestandteil des Rahmens und in im wesentlichen vertikaler Richtung bewegbar ist, ein Getriebe (26) aufweist, dessen Eingangswelle (27) beispielsweise über eine elastische Kupplung (28) mit der Zapfwelle des Schleppers verbunden ist und dessen Ausgangswellen (29, 30) dem Antrieb des Mähwerkes (24) bzw. des Konditionierers (25) dienen.

## Revendications

1. Machine agricole comprenant une unité de fauchage (24) et un châssis pour relier l'unité de fauchage (24) au dispositif d'attelage-levage sur le côté antérieur d'un tracteur, ledit châssis étant pourvu d'un élément de couplage (1) destiné à s'engager avec le dispositif d'attelage-levage, deux poutres de support inférieures (11) sensiblement parallèles qui sont reliées, sensiblement à la même hauteur, audit élément de couplage (1) en étant capables de pivoter dans un plan vertical près de l'extrémité inférieure de celui-ci, au moins une poutre de support supérieure (9) reliée près de l'extrémité supérieure de l'élément de couplage (1) en étant capable de pivoter dans un plan vertical, un châssis porteur (13) pour l'unité de fauchage (24), lequel châssis porteur (13) est relié auxdites poutres de support inférieures (11) et est relié de manière pivotante à ladite poutre de support supérieure (9), les liaisons de l'élément de couplage avec lesdites poutres de support inférieures et ladite poutre de support supérieure (9) étant situées, vu dans le sens du déplacement de travail, derrière les liaisons du châssis porteur avec lesdites poutres de support inférieures et ladite poutre de support supérieure, et au moins un ressort de délestage (22) assurant un soulagement du poids de la machine agricole qui est, dans l'étendue d'un certain domaine en hauteur, sensiblement indépendant de la position du châssis porteur (13) par 'rapport au dispositif d'attelage-levage, ladite position étant alors variable,
**caractérisée en ce que** les poutres de support inférieures (11) sont reliées de manière pivotante au châssis porteur (13) et **en ce que** le ressort de délestage (22) est prévu entre l'élément de couplage (1) et le châssis porteur (13), tandis que la machine agricole comprend en outre un dispositif tasseur (25) qui est situé partiellement sous le châssis et partiellement à l'intérieur du châssis et qui est rélié au châssis porteur (13).

2. Machine agricole selon la revendication 1, **caractérisée en ce que** les arbres de pivotement (12) des poutres de support inférieures (11) par rapport à l'élément de couplage (1) sont situés en dessous des arbres de pivotement de l'élément de couplage (1) reliant celui-ci aux bras pivotants (4) du dispositif d'attelage-levage.

3. Machine agricole selon la revendication 1 ou 2, **caractérisée en ce que** l'élément de couplage (1) comprend des poutres (6) s'étendant horizontalement, sur les extrémités desquelles sont articulées les poutres de support inférieures (11).

4. Machine agricole selon la revendication 1, 2 ou 3, **caractérisée en ce que** le ressort de délestage (22) est relié à l'élément de couplage (1) près de l'extrémité supérieure de celui-ci et, par suite, s'étend obliquement vers le bas jusqu'au châssis porteur (13).

5. Machine agricole selon la revendication 4, **caractérisée en ce que** le ressort de délestage (22) est relié à l'élément de couplage (1) sensiblement à la même hauteur que la poutre de support supérieure (9).

6. Machine agricole selon l'une quelconque des revendications précédentes, **caractérisée en ce que** deux ressorts de délestage (22, 23) sont disposés entre l'élément de couplage (1) et le châssis porteur (13).

7. Machine agricole selon la revendication 6, **caractérisée en ce que** les ressorts de délestage (22, 23) sont prévus de part et d'autre du centre de gravité de la machine et sont, de préférence, équidistants de ce centre de gravité.

8. Machine agricole selon l'une quelconque des revendications précédentes, **caractérisée en ce que**, pendant le travail, le soulagement du poids de la machine agricole varie au maximum de 10% dans l'étendue d'un domaine qui est au maximum de 30%, dans lequel la position du châssis peut pivoter par rapport au dispositif d'attelage-levage dans un plan sensiblement vertical, ledit domaine se situant, par rapport à un plan horizontal, dans un intervalle d'environ -15° à +30°, de préférence d'environ 0° à +30°.

9. Machine agricole selon la revendication 8, **caractérisée en ce que** ledit domaine est réglable.

10. Machine agricole selon l'une quelconque des revendications précédentes, **caractérisée en ce que** l'angle selon lequel, au cours du travail, le ressort de délestage s'étend obliquement vers le bas par rapport au plan horizontal, dans une direction s'éloignant du dispositif d'attelage-levage, peut varier dans un intervalle d'environ -40° à -15° et en particulier d'environ -30° à-15°.

11. Machine agricole selon l'une quelconque des revendications 6 à 10,
**caractérisée en ce que** l'élément de couplage (1) est muni d'éléments porteurs (7) qui lui sont reliés de manière rigide et qui s'étendent au moins dans une direction s'éloignant de la machine, tandis que les poutres de support inférieures (11) sont articulées avec lesdits éléments porteurs (7) sur l'extrémité de ceux-ci qui est la plus éloignée de la machine.

12. Machine agricole selon la revendication 11, **caractérisée en ce que**, dans le point de pivotement de chacune des poutres de support inférieures (11),
un élément de support (16) est monté pivotant par rapport à un élément porteur (7) correspondant, tandis qu'un vérin hydraulique (17) est disposé entre chacune des poutres de support inférieures (11) et un élément de support (16) correspondant, et que le domaine dans lequel peut pivoter la position des poutres de support inférieures (11) est réglé au moyen desdits vérins hydrauliques (17).

13. Machine agricole selon la revendication 12, **caractérisée en ce que** la construction triangulaire constituée par une poutre de support inférieure (11), un élément de support (16) et un vérin hydraulique (17) peut pivoter entre deux butées (18, 19) autour dudit point de pivotement par rapport à un élément porteur (7) correspondant.

14. Machine agricole selon la revendication 13, **caractérisée en ce que** la première butée (18) est constituée par une face ménagée sur l'élément de couplage (1) et dirigée vers l'élément de support (16).

15. Machine agricole selon la revendication 13 ou 14, **caractérisée en ce que** la deuxième butée (19) est constituée par une face ménagée sur l'élément porteur (7) et dirigée vers la poutre de support inférieure (11).

16. Machine agricole selon l'une quelconque des revendications 6 à 15,
**caractérisée en ce que**, pendant le travail, les poutres de support inférieures (16) sont réglées à un angle compris dans l'intervalle d' environ -10° à +20°, de préférence d'environ 4°, par rapport au plan horizontal, et sont pivotantes autour de l'angle réglé, dans un domaine s'étendant, de préférence, d'environ 0° à 30°, déterminé par les vérins hydrauliques (17) et par les butées (18, 19).

17. Machine agricole selon l'une quelconque des revendications précédentes, **caractérisée en ce qu'**un châssis porteur (13) qui fait partie du châssis et qui est mobile dans une direction sensiblement verticale, est muni d'une boîte de transmission (26) dont l'arbre d'entrée (27) est relié, par exemple au moyen d'un accouplement flexible (28), à l'arbre de prise de force du tracteur, et dont les arbres de sortie (29, 30') sont utilisés pour entraîner respectivement l'unité de fauchage (24) et le dispositif tasseur (25).
